Europäisches Patentamt

European Patent Office

Office européen des brevets

(19)

(11) Veröffentlichungsnummer: **0 251 290 B1**

(12) **EUROPÄISCHE PATENTSCHRIFT**

(45) Veröffentlichungstag der Patentschrift: **13.03.91**

(51) Int. Cl.⁵: **B62D 5/07, B66F 9/22**

(21) Anmeldenummer: **87109385.2**

(22) Anmeldetag: **30.06.87**

(54) Kraftfahrzeug, vorzugsweise Flurförderzeug, mit einer hydraulischen Arbeitseinrichtung und mit einer hydraulischen Lenkhilfskraftunterstützungseinrichtung.

(30) Priorität: **02.07.86 DE 3622218**

(43) Veröffentlichungstag der Anmeldung:
**07.01.88 Patentblatt 88/01**

(45) Bekanntmachung des Hinweises auf die
Patenterteilung:
**13.03.91 Patentblatt 91/11**

(84) Benannte Vertragsstaaten:
**AT BE CH DE ES FR GB GR IT LI NL SE**

(56) Entgegenhaltungen:
EP-A- 0 072 233     FR-A- 2 396 881
GB-A- 1 410 193     GB-A- 1 501 955
GB-A- 2 004 248     GB-A- 2 102 511
US-A- 3 956 891     US-A- 3 976 158

(73) Patentinhaber: **STILL GMBH**
**Berzeliusstrasse 10**
**W-2000 Hamburg 74(DE)**

(72) Erfinder: **Kröhling, Erich, Dipl.-Ing.**
**Schaumannskamp 69**
**W-2057 Reinbek(DE)**

(74) Vertreter: **Schaefer, Gerhard, Dr.**
**Linde Aktiengesellschaft Zentrale Patentab-**
**teilung**
**W-8023 Höllriegelskreuth(DE)**

## Beschreibung

Die Erfindung betrifft ein Kraftfahrzeug gemäß Oberbegriff des Patentanspruchs 1. Ein derartiges Kraftfahrzeug ist sowohl aus der EP-A-0 072 233 als auch aus der GB-A-1 501 955 bekannt und nutzt die in den Antriebsbatterien zur Verfügung stehende elektrische Energie durch eine wirtschaftliche Steuerung des Elektromotors bereits gut aus.

Es ist auch schon bekannt, bei Gabelstaplern zwei Hydraulikpumpen vorzusehen, von denen die eine die hydraulische Arbeitseinrichtung, die andere die Lenkhilfskraftunterstützungseinrichtung beaufschlagt. Das ist sowohl bei Gabelstaplern mit dieselmotorischem Antrieb wie auch bei Gabelstaplern mit batterie-elektrischem Antrieb der Still GmbH bekannt. Diese letztere Lösung ist eine im Prinzip sehr gedanklich klare Lösung, erfordert aber mit zwei Elektromotor-Pumpen-Aggregaten einen großen Herstellaufwand und da auch beim heutigen Stand der Technik jeder Elektromotor und jede Pumpe irgendwann einmal Störungen haben kann, ist mit zwei Motor-Pumpen-Aggregaten die Gefahr einer Störanfälligkeit größer als bei nur einem solchen Aggregat. Dabei ist es auch schon bekannt, den die die Lenkhilfskraftunterstützungseinrichtung beaufschlagende Pumpe antreibenden Elektromotor über eine Impulssteuerung zu steuern, die abhängig vom Drehmoment in der Lenkwelle angesteuert wird (DE-A-29 15 809).

Es ist auch an sich bekannt, Signale aus der Ansteuerung einer Arbeitshydraulik mit Signalen für die Steuerung des Fahrantriebs des Fahrzeuges zu verknüpfen (DE-A 30 35 152). Bei einem batterie-elektrischen Stapler mit zwei Elektromotor-Pumpen-Aggregaten, von denen eines die hydraulische Arbeitseinrichtung und die andere die Lenkhilfkrafteinrichtung beaufschlagt, ist es auch bereits bekannt, an die Förderleitung der Pumpe für die Lenkhilfskrafteinrichtung ein im Aufbau einem Prioritätsventil entsprechendes Ventil anzuschließen, damit die Pumpe nicht gegen höheren Druck fördert, wenn dieser gar nicht benötigt wird, und somit, um Antriebsenergie einzusparen.

Der Erfindung liegt die Aufgabe zugrunde, ein Fahrzeug gemäß Oberbegriff des Patentanspruchs 1 derart zugestalten, daß es mit geringen Herstellkosten herstellbar ist und möglichst wenige störanfällige Teile aufweist.

Diese Aufgabe wird durch die Kombination der im kennzeichnenden Teil des Anspruchs 1 angegebenen Merkmale gelöst.

Bei dem Fahrzeug gemäß der Erfindung ist also für die hydraulische Arbeitseinrichtung und die hydraulische Lenkhilfskraftunterstützungseinrichtung nur ein Elektromotor-Pumpen-Aggregat vorgesehen, wobei die hydraulische Lenkhilfskraftunterstützungseinrichtung über das Prioritätsventil beaufschlagt wird, wobei der Elektromotor über eine Impulssteuerung angesteuert wird, die sowieso vorhanden ist, weil diese Impulssteuerung für das Ansteuern der Pumpenförderleistung für die Beaufschlagung der hydraulischen Arbeitseinrichtung benutzt wird. Zusätzlich wird jetzt nur diese Impulssteuerung beaufschlagt von Signalen, die angeben, welchen Strom die hydraulische Lenkhilfskraftunterstützungseinrichtung benötigt. Das heißt, erfolgt weder eine Lenkbewegung noch eine Bewegung oder ein Festhalten unter Druck in der hydraulischen Arbeitseinrichtung, kann die Pumpe stillstehen. Wenn nur ein geringer Strom zum Beispiel für die hydraulische Lenkhilfskraftunterstützungseinrichtung benötigt wird, kann die Pumpe mit sehr geringer Drehzahl umlaufen und nur dann, wenn ein größerer Strom, beispielsweise für die hydraulische Arbeitseinrichtung oder für eine schnelle Lenkbewegung, benötigt wird, wird der die Pumpe antreibende Elektromotor über die Impulssteuerung auf eine größere Drehzahl gesteuert.

Besonders zweckmäßig ist es, wenn das abhängig von der Stromanforderung der hydraulischen Lenkhilfskraftunterstützungseinrichtung gegebene Signal abhängig ist von der Druckdifferenz vor und hinter einer steuernden Drosselstelle ("Meßdrosselstelle") in der Lenkhilfskrafteinrichtung entsprechend dem System eines sogenannten "Load-sensing-Signales". Derartige Load-sensing-Signale zum Ansteuern der die Arbeitshydraulik beaufschlagenden Pumpe antreibenden Brennkraftmaschine zu benutzen, ist an sich bekannt (DE-A-35 12 348 und DE-A- 33 21 484).

Ausgehend von der Tatsache, daß für den Schutz die Gesamtheit der Anspruchsmerkmale maßgebend ist, kann die Erfindung auch darin gesehen werden, daß ausgehend von einem Fahrzeug mit batterie-elektrischem Antrieb für den Fahrantrieb und für die die hydraulische Arbeitseinrichtung beaufschlagende Pumpe an die Förderleitung dieser Pumpe ein Prioritätsventil angeschlossen ist, von dem aus der Vorzugsstrom der hydraulischen Lenkhilfskraftunterstützung zugeführt wird und der Überschuß-Strom der hydraulischen Arbeitseinrichtung zugeführt wird, wobei zusätzlich der die Pumpe antreibende Elektromotor über eine Impulssteuerung angesteuert wird, die einerseits zur Beaufschlagung der hydraulischen Arbeitseinrichtung willkürlich ansteuerbar ist und darüberhinaus abhängig von einem Signal der Lenkhilfskraftunterstützungseinrichtung ansteuerbar ist, vorzugsweise von einem einem Load-sensing-Signal entsprechenden Signal.

Die Erfindung wird im Folgenden anhand eines Schaltschemas näher erläutert.

Die Pumpe 1 fördert in eine Förderleitung 2, an die ein Prioritätsventil 3 angeschlossen ist, von dem aus die den Vorzugsstrom führende Leitung 4 zu der hydraulischen Lenkeinrichtung 5 führt, während der zweite aus dem Prioritätsventil 3 abgeführte Strom über die Leitung 6 abfließt.

Mit dem Lenkhandrad 7 ist die Lenkwelle 8 verbunden, die ihrerseits mit einem Lenkventil 9 verbunden ist, welches in die hydraulichse Lenkhilfskraftunterstützung 5 eingeschaltet ist, über die wiederum die beiden Druckräume des Lenkzylinders 10 mit Druckmittel beaufschlagt werden.

An die Leitung 4 ist eine Drucksignalleitung 12 angeschlossen, die einen Steuerdruckraum des Prioritätsventiles 3 beaufschlagt, während der Druck hinter dem Lenkventil 9 über die Steuerdrucksignalleitung 11 dem zweiten Steuerdruckraum des Prioritätsventiles 3 zugeführt wird.

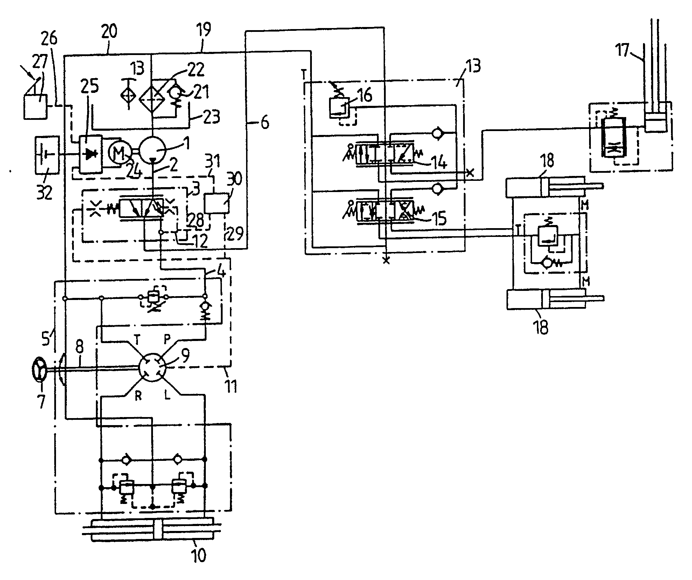

Die Leitung 6 führt zu einem Steuerblock 13 mit zwei Wegeventilen 14 und 15 und einem Druckbegrenzungsventil 16. Über das Wegeventil 14 wird das Zylinder-Kolben-Aggregat 17 des Hubgerüstes des Hubladers, in dem die in der Zeichnung dargestellte Einrichtung eingebaut ist, beaufschlagt und über das Wegeventil 15 werden die Zylinder-Kolben-Aggregate 18 der Neigeeinrichtung für das Hubgerüst, das in der Zeichnung nicht mehr dargestellt ist, beaufschlagt.

An das Steuergerät 13 ist eine Rücklaufleitung 19 angeschlossen und an die Lenkeinrichtung 5 ist eine Rücklaufleitung 20 angeschlossen, die beide über einen durch ein Rückschlagventil 21 abgesicherten Filter 22 zu einem Speicherbehälter 23 führen, aus dem die Pumpe 1 ansaugt.

Die Pumpe 1 wird über einen Elektromotor 24 angetrieben, der seinerseits über eine Impulssteuerung 25 angesteuert wird, die über eine elektrische Steuersignalleitung 26 an ein willkürlich betätigbares Steuergerät 27 angeschlossen ist, durch welches die Drehzahl des Motors 24 und damit der Förderstrom der Pumpe 1 willkürlich eingestellt werden kann, abhängig von dem Bedarf des Zylinder-Kolben-Aggregates 17 und bzw. oder 18.

An die hydraulische Steuerdruckleitung 12 ist eine Steuersignalleitung 28 angeschlossen und an die hydraulische Steuerdruckleitung 11 ist eine hydraulische Steuerdruckleitung 29 angeschlossen, die beide zu je einem Eingang eines Signalgebers 30 führen, der abhängig von der Differenz der in den beiden Leitungen 28 und 29 geführten Drücke über die Leitung 31 ein elektrisches Signal auf die Impulssteuerung 25 gibt, die ihrerseits an die Batterie 32 angeschlossen ist, von der aus der Elektromotor 24 mit Energie versorgt wird.

Die Wirkungsweise ist folgende:

Der Förderstrom der Pumpe 1 gelangt über die Leitung 2 zu dem Prioritätsventil 3, von dem immer ein Vorzugsstrom durch die Leitung 4 der Lenkeinrichtung 5 zugeführt wird. In dem Lenkventil 9 ist eine Meßdrosselstelle vorgesehen, die ein Druckgefälle gegenüber dem in der Leitung 4 anstehenden Druck bewirkt. Der kleinere Druck dieses Druckgefälles wird über die Steuersignalleitung 11 auf das Prioritätsventil 3 gegeben, das andererseits von dem Druck in der Leitung 4 beaufschlagt ist.

Der Sekundärstrom des Prioritätsventiles 3 wird über die Leitung 6 der hydraulischen Arbeitseinrichtung 13 bis 18 zugeführt. Damit die Pumpe 1 jederzeit einen Strom fördert, der ausreichend ist für die Beaufschlagung der hydraulischen Arbeitseinrichtung 13 bis 18, wird das Steuerorgan 27 angesteuert, welches die Impulssteuerung 26 steuert. Damit weiterhin die Lenkeinrichtung 5 stets mit dem erforderlichen Strom beaufschlagt wird, wird die Druckdifferenz zwischen den Drücken in den Leitungen 4 und 11 nicht nur auf das Prioritätsventil 3 gegeben, sondern auch auf das Steuerorgan 30, welches ebenfalls die Impulssteuerung 25 ansteuert.

Für die Lenkung und die Gestaltung des Prioritätsventiles sind zwei Ausgestaltungsformen möglich. Bei einer Lenkung, die dauernd - also auch dann, wenn keine Lenkbewegung erfolgt - von einem Ölstrom durchflossen werden muß, ist das Prioritätsventil derart ausgestaltet, daß es ständig einen Vorzugsstrom durch die Lenkung liefert, also auch dann, wenn keine Lenkbewegung erfolgt, aber möglichst der volle Pumpenstrom der Arbeitshydraulik zufließen sollte. Bei einer anderen Ausgestaltungsform ist die Lenkeinrichtung derart gestaltet, daß sie geschlossen ist, wenn keine Lenkbewegung erfolgt, dann kann auch das Ventil derart gestaltet sein, daß es in diesen Betriebszuständen keinen Ölstrom zu der Lenkhydraulik leitet, sondern im Bedarfsfall der volle Förderstrom der Pumpe der Arbeitshydraulik zur Verfügung steht, nur muß dann dafür gesorgt werden, daß sofort bei Beginn einer Lenkbewegung ein Signal an das Ventil gegeben wird, das eine Öffnung des Ventils bewirkt derart, daß ein Strom zur Lenkung fließt. Die Baugruppe 9 ist im vorliegenden Text als "Lenkventil" bezeichnet worden, weil dieses Ventil für die Erfindung das Wesentliche ist. Bei den üblichen Ausgestaltungsformen derartiger Einrichtungen ist mit der Lenkwelle eine Lenkdosierpumpe verbunden, deren Förderstrom das eigentliche Ventil steuert. Die Anwendung einer solchen Baugruppe ist auch im Rahmen der Erfindung vorgesehen.

Bei einer anderen Ausgestaltungsform der Erfindung ist auch möglich, daß nicht die Druckdifferenz bzw. das Druckgefälle zwischen den beiden Leitungen 28 und 29 das steuernde Signal auslöst, sondern lediglich der Druck in der Leitung 11 (29). In diesem Fall kann die Leitung 28 entfallen.

Das Betätigungsorgan des Steuergerätes 27 ist mit den Betätigungsorganen der Ventile 14 oder bzw. insbesondere und 15 verbunden.

Besonders zweckmäßig ist, wenn für die Steuerung des Elektromotors 24 zusätzlich eine Hochlaufsteuerung vorgesehen ist, die bewirkt, daß beim Einschalten die Drehzahl des Elektromotors 24 mit einer vorgegebenen Beschleunigung steigt um zu bewirken, daß bei Zuschalten der Lenkhilfskrafteinrichtung der Übergang sanft rückfrei erfolgt. Ein weiches Anlaufen kann für den Bedienungskomfort wesentlich sein.

In einer anderen Ausgestaltungsform der Erfindung ist möglich, die Drehzahl des Motors 24 und damit der Pumpe 1 konstant zu halten, gegebenenfalls bei Vorhandensein einer Hochlaufsteuerung nach Erreichen der angesteuerten Enddrehzahl konstant zu halten. Für eine solche Steuerung ist es vorteilhaft, wenn die jeweils angesteuerte Drehzahl unabhängig von dem auftretenden Druck ist.Um diese Unabhängigkeit sicherzustellen, kann möglich sein, die tatsächliche Pumpendrehzahl mit einem Pumpendrehzahlistwertgeber zu erfassen und ausgehend von einem Sollwert-IstwertVergleich die Steuerung 25 zu beeinflussen.

Bei einer anderen Ausgestaltungsform ist vorgesehen, daß das Pumpen-Aggregat 24, 1 nach Einschalten dauernd mit einer kleinen geregelten Drehzahl mitläuft, wobei das Einschalten beispielsweise über das Schaltschloß, also bei Inbetriebnahme des Fahrzeuges,erfolgen kann. Die Pumpendrehzahl wird so gewählt, daß eine ausreichende Ölmenge für die Lenkung über das Prioritätsventil 3 zur Vergügung steht. Bei Betätigung einer der Ventile 14 oder 15 wird dann die Drehzahl des Motorpumpen-Aggregates 24, 1 auf den jeweils gewünschten Wert verändert bis zur maximalen Drehzahl.

Schließlich ist es auch noch im Rahmen der Erfindung, wenn das abhängig von dem Druck hinter dem Lenkventil 9 gesteuerte Steueraggregat 30 ganz fortgelassen wird und nur über das Steuergerät 27 bzw. die Impulssteuerung 25 angesteuert wird.

Wesentlich für die Erfindung ist somit, daß bei einem Fahrzeug mit batterie-elektrischem Antrieb ein einziges Elektromotor-Pumpe-Aggregat, das zu einem Prioritätsventil fördert, sowohl für die Beaufschlagung der Arbeitshydraulik wie auch für die Beaufschlagung der Lenkhilfskraftunterstützungseinrichtung vorgesehen ist, wobei eine Drehzahlsteuerung für die Drehzahl des Elektromotors 24 derart vorgesehen ist, daß die Pumpe 1 stets den jeweils benötigten Druckmittelstrom fördert, vorzugsweise einen nicht unnötig großen Druckmittelstrom.

## Ansprüche

1. Kraftfahrzeug, insbesondere Hublader mit einem batterie-elektrischem Fahrantrieb, mit einer Lenkeinrichtung mit hydraulischer Hilfskraftunterstützung (5) und mit einer hydraulischen Arbeitseinrichtung (13 bis 18), bei einem Gabelstapler einem Hubzylinder-Kolben-Aggregat (17, 18) für das Hubgerüst, und mit einer für die Beaufschlagung dieser Arbeitseinrichtung (13 bis 18) vorgesehenen, mit einem Elektromotor (24) verbundenen Pumpe (1), deren Strombeaufschlagung mittels einer Impulssteuerung (25) gesteuert wird, und mit einem an die Förderleitung (2) dieser Pumpe (1) angeschlossenen Prioritätsventil (3), an dessen Ausgang (4) für den Vorzugsstrom die hydraulische Lenkhilfskraftunterstützungseinrichtung (5) angeschlossen ist, dadurch gekennzeichnet, daß die für die Beaufschlagung der Arbeitseinrichtung (13 bis 18) willkürlich ansteuerbare Impulssteuerung (25) zusätzlich abhängig von einem von der Lenkeinrichtung (5) ausgehenden Signal gesteuert wird, das abhängig ist von dem in einer Steuersignalleitung (11) hinter einem Lenkventil (9) geführten Druck, wobei dieser Druck in einem Steuerorgan (30) erfaßt und in ein elektrisches Signal umgesetzt wird, welches über eine elektrische Steuersignalleitung (31) der Impulssteuerung (25) zugeführt wird.

2. Kraftfahrzeug nach Anspruch 1, dadurch gekennzeichnet, daß das von der Lenkeinrichtung (5) ausgehende Signal abhängig ist von der Differenz zwischen einerseits dem Druck in der von dem Prioritätsventil (3) ausgehenden, zum Lenkventil (9) führenden Vorzugsstromleitung (4) und andererseits von dem in der Steuersignalleitung (11) hinter dem Lenkventil (9) geführten Druck, wobei diese Druckdifferenz in dem Steuerorgan (30) erfaßt und in das elektrische Signal umgesetzt wird.

3. Kraftfahrzeug nach Anspruch 1 oder 2, dadurch gekennzeichnet, daß für die Strombeaufschlagung des Elektromotors (24) eine Hochlaufsteuerung vorgesehen ist.

4. Kraftfahrzeug nach einem der vorangegangenen Ansprüche, dadurch gekennzeichnet, daß für das Motor-Pumpen-Aggregat (24, 1) eine Konstantdrehzahlregeleinrichtung vorgesehen ist.

## Claims

1. A motor vehicle, in particular a lifting truck comprising a battery-electric travelling mechanism, a steering device with a hydraulic servo-steering device (5) and a hydraulic operating device (13 to 18), in the case of a fork-lift truck a lifting cylinder-piston assembly (17, 18) for the lifting frame, and comprising a pump (1) which act upon this operating device (13 to 18), is connected to an electric motor (24), and the flow control of which is controlled by means of a pulse control unit (25), and comprising a priority valve (3) which is connected to the conveying line (2) of this pump (1), and whose output (4) for the main flow is connected to the hydraulic servo-steering device (5), characterised in that the pulse control unit (25), which can be arbitrarily operated for the control of the operating device (13 to 18) is additionally controlled in dependence upon a signal which is emitted from the steering device (5) and which is dependent upon the pressure conducted in a control sinal line (11) following a steering valve (9), where this pressure is detected in a control member (30) and converted into an electric signal which is fed via an electric control signal line (31) to the pulse control unit (25).

2. A motor vehicle as claimed in Claim I, characterised in that the signal emitted by the steering device (5) is dependent upon the difference between on the one hand the pressure in the main flow line (4) which leads from the priority valve (3) to the steering valve (9), and on the other hand the pressure which is conducted in the control signal line (11) following the steering valve (9), where this pressure difference is detected in the control member (30) and converted into the electric signal.

3. A motor vehicle as claimed in Claim 1 or 2, characterised in that a ramp-function control is provided for the current supply of the electric motor (24).

4. A motor vehicle as claimed in one of the preceding Claims, characterised in that a constant speed regulating device is provided for the motor pump assembly (24, 1).

## Revendications

1. Véhicule, en particulier chargeur élévateur pourvu d'un mécanisme de roulage actionné électriquement par batterie, d'un dispositif de direction avec assistance hydraulique (5) et d'un dispositif de travail hydraulique (13 à 18), avec, sur un chariot élévateur ou gerbeur à fourches, un groupe piston-vérin de levage (17, 18) destiné au cadre de levage et une pompe (1) reliée à un moteur électrique (24), qui est prévue pour l'alimentation de ce dispositif de travail (13 à 18) et dont l'alimentation en courant est commandée au moyen d'une commande à impulsions (25), avec, en outre, une soupape de priorité (3) reliée à la conduite de refoulement (2) de cette pompe (1), à la sortie (4) du courant prioritaire de laquelle est relié le dispositif hydraulique d'assistance de direction (5), caractérisé en ce que la commande à impulsions (25), sélectionnable arbitrairement pour l'alimentation du dispositif de travail (13 à 18), est commandée en outre en fonction d'un signal émis par le dispositif de direction (5), qui dépend de la pression transmise dans une conduite de signaux de commande (11) derrière une soupape de direction (9), laquelle pression est captée dans un organe de commande (30) et est transformée en un signal électrique qui est acheminé par un raccordement électrique (31) de signaux de commande à la commande à impulsions (25).

2. Véhicule selon la revendication 1, caractérisé en ce que le signal émis par le dispositif de direction (5) est fonction de la différence entre, d'une part, la pression dans la conduite de courant prioritaire (4) sortant de la soupape de priorité (3) et menant à la soupape de direction (9) et, d'autre part, la pression transmise dans la conduite (11) de signaux de commande derrière la soupape de direction (9), laquelle différence de pression est captée dans l'organe de commande (30) et transformée en signal électrique.

3. Véhicule selon la revendication 1 ou 2, caractérisé en ce qu'une commande de montée en régime est prévue pour l'alimentation en courant du moteur électrique (24).

4. Véhicule selon l'une des revendications qui précèdent, caractérisé en ce qu'un dispositif de réglage réalisant une vitesse constante de rotation est prévu pour le groupe moto-pompe (24, 1).